# EUROPÄISCHE PATENTANMELDUNG

(11) **EP 2 756 909 A1**
(43) Veröffentlichungstag der Anmeldung: **23.07.2014**
(21) Anmeldenummer: 13152064.5
(22) Anmeldetag: 21.01.2013
(51) Int. Cl.: B23K 9/04, B23K 26/34, B23P 6/00, F01D 5/00

(54) **Auftragsschweißen von länglichen, gekrümmten Wänden**

(71) Anmelder: Siemens Aktiengesellschaft, 80333 München (DE); Fraunhofer-Gesellschaft zur Förderung der angewandten Forschung e.V., 80686 München (DE)
(72) Erfinder: Arjakine, Nikolai, 10555 Berlin (DE); Burbaum, Bernd, 14612 Falkensee (DE); Gasser, Andres, 52066 Aachen (DE); Linnenbrink, Stefanie, 52372 Kreuzau (DE); Mehlhorn, Andre, 12307 Berlin (DE); Melzer-Jokisch, Torsten, 15366 Neuenhagen bei Berlin (DE); Mentzel, Frank, 52066 Aachen (DE); Ott, Michael, 45470 Mülheim an der Ruhr (DE); Pirch, Norbert, 52074 Aachen (DE)

(57) **Zusammenfassung**

Bei dem Auftragsschweißen von U-förmigen Flächen wird zuerst eine geschlossen verlaufende Konturlinie (4) gelegt, die mit U-förmigen nicht geschlossen verlaufenden Schweißspuren (16', 16" ) aufgefüllt wird, um so eine gute Festigkeit der U-Form beim Auftragsschweißen zu erreichen.

## Beschreibung

Die Erfindung betrifft das Auftragsschweißen einer länglichen, gekrümmten Wand.

Turbinenschaufeln weisen oft einen Kronenboden auf, der an der Schaufelspitze ausgebildet ist. Bei der Herstellung oder bei der Wiederaufbereitung wird der Kronenboden als Wand durch Auftragsschweißen erzeugt und muss eine hohe Festigkeit aufweisen, da sie mit dem Gehäuse in Berührung kommen kann.

Es ist daher Aufgabe der Erfindung, die Eigenschaften einer neu aufzubauenden, gekrümmt verlaufenden Wand zu verbessern.

Die Aufgabe wird gelöst durch ein Auftragsschweißverfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:

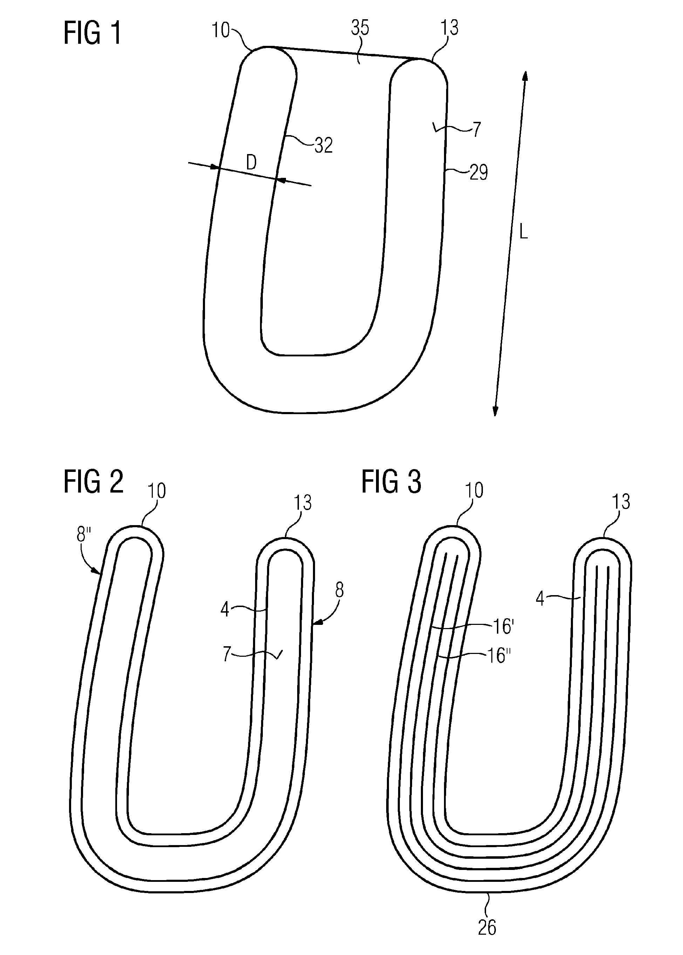

- Figuren 1 bis 6: Ausführungsbeispiele der Erfindung.

Die Figuren und die Beschreibung stellen nur Ausführungsbeispiele der Erfindung dar.

Figur 1 zeigt eine längliche, gekrümmt verlaufende Fläche 7 in vereinfachter Darstellung auf einer Grundfläche 35, die U-förmig, vorzugsweise gekrümmt U-förmig ausgebildet ist und somit zwei Enden 10, 13 einem U-Boden 26 gegenüberliegend, aufweist, die 10, 13 nah beieinander liegen.

Die Grundfläche 35 entspricht vorzugsweise dem Kronenboden einer Turbinenschaufel.

Die Länge L der Grundfläche 35, auf der die Fläche 7 angeordnet ist, ist, verglichen zu ihrer Wandstärke D der herzustellenden Wand, sehr lang oder sehr groß. Um eine solche Fläche 7 zu erzeugen, wird zuerst eine äußere Schweißkontur 4 entlang des äußeren 29 und inneren 32 Rands der Fläche 7 gelegt, die einen geschlossenen Verlauf darstellt. Die Schweißkontur 4 umfasst die Fläche 7.
Die Schweißkontur 4 nahe oder auf dem Rand 29, 32 wird vorzugsweise unter einem deutlich von 90° verschiedenen Winkel eines Schweißstrahls zur Fläche 7 gelegt.

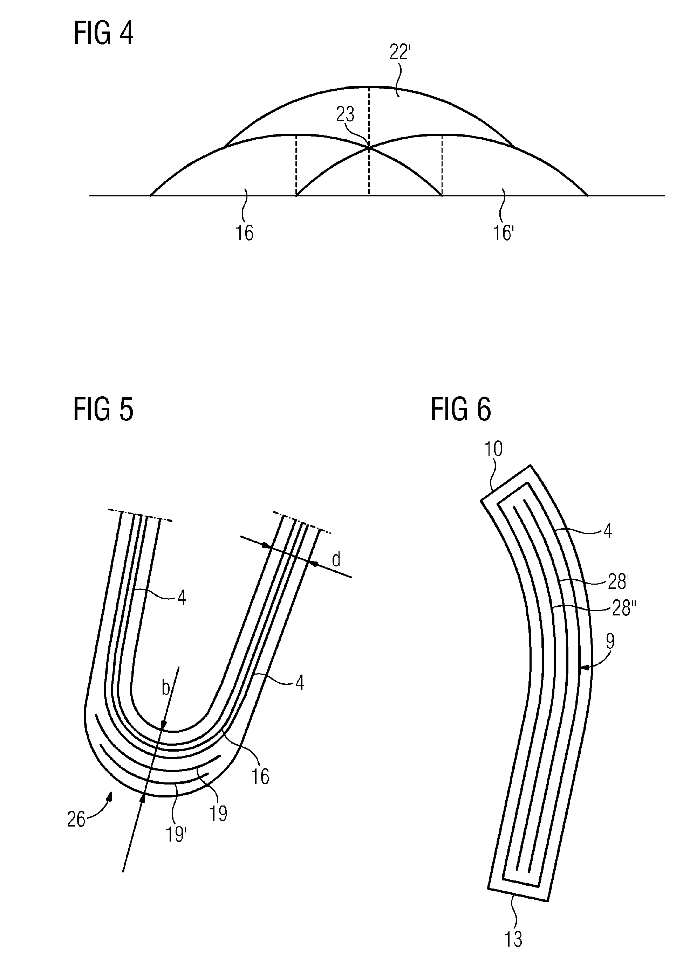

Innerhalb dieser geschlossen verlaufenden, äußeren Schweißkontur 4 werden weitere Schweißbahnen 16, 16', ... gelegt, um die Querschnittsfläche des Fläche 7 zu erzeugen und um die Fläche 7 innerhalb der äußeren Schweißkontur 4 vollständig auszufüllen.
Diese Schweißspuren 16', 16'', ... beginnen an einem Ende 10 und hören an einem Ende 13 des Kronenbodens 7 auf und verlaufen äquidistant oder parallel zur äußeren Schweißkontur 4. Dabei überlappen sie sich vorzugsweise (Fig. 4). Vorzugsweise beginnt man mit einer Schweißbahn 16 am äußeren Rand 32 (innerhalb der U-Schenkel 8', 8'').

Wird mehr als eine Schweißlage benötigt, um eine geforderte Höhe einer Wand mit der Grundfläche der Fläche 7 zu erzeugen, so wird die nachfolgende Schweißbahn 22' der zweiten oder weiteren Schweißlage mittig zwischen zwei zu unterst liegenden Schweißbahnen 16', 16" und dort wo sich eine Mulde 23 zwischen den parallel verlaufenden Schweißmulden 22', 22" gebildet hat (Figur 4) gelegt.

Figur 5 zeigt ein weiteres Ausführungsbeispiel der Erfindung. Im Bereich eines U-Bodens 26 einer U-Form, der mit seiner Breite b (in Richtung der Länge L) deutlich breiter ausgebildet ist, als die mittlere Wandstärke d der Fläche 7, z.B. im Bereich der U-Schenkel 8', 8''. Durch die Schweißspuren 16', 16'', ..., die parallel zur äußeren Schweißkontur 4 verlaufen, verbleibt eine Restfläche im Bereich des U-Bodens 26, die nicht abgedeckt ist. Diese Restfläche wird durch einzelne Schweißspuren 19, 19', ..., nur im U-Boden 26, die ebenfalls gekrümmt verlaufen, vollständig abgedeckt.

Figur 6 zeigt eine gekrümmt verlaufende Fläche 9 mit zwei Enden 10, 13.
Um eine solche Fläche 9 zu erzeugen, wird zuerst eine äußere Schweißkontur 4 gelegt, die einen geschlossenen Verlauf darstellt. Innerhalb dieser geschlossen verlaufenden Schweißkontur 4 werden weitere Schweißbahnen 28', 28', ... gelegt, um die Querschnittsfläche der Fläche 9 zu erzeugen und die Fläche innerhalb der Schweißkontur 4 vollständig auszufüllen. Diese Schweißspuren 28', 28'', ... beginnen an einem Ende 10 und hören an einem Ende 13 auf und verlaufen äquidistant oder parallel zur äußeren Schweißkontur 4. Dabei überlappen die Schweißspuren 28', 28'', ... sich vorzugsweise.

## Patentansprüche

1. Verfahren
zum Auftragsschweißen einer gekrümmt verlaufenden, länglichen,
insbesondere U-förmigen,
Fläche (7),
bei dem zuerst eine geschlossen verlaufende Schweißkontur (4) nahe oder auf dem inneren Rand (32) und dem äußeren Rand (29) der Fläche (7) gelegt wird,
dann erst innen liegende Schweißspuren (16', 16'', ...) innerhalb der Schweißkontur (4) gelegt werden,
die äquidistant oder parallel zur Schweißkontur (4) verlaufen,
um eine erste Schweißlage (1) zu erzeugen,
insbesondere um vollständig die Fläche (7) zu bedecken.

2. Verfahren nach Anspruch 1,
bei dem die innen liegenden Schweißspuren (16', 16", ...) gekrümmt verlaufen, wie die Ränder (29, 32) der Fläche (7), die (16', 16'', ...),
insbesondere U-förmig ausgebildet sind,
und nur von einem Ende (10) der länglichen Fläche (7) bis zum anderen Ende (13) der Fläche (7) verlaufen.

3. Verfahren nach einem oder beiden der Ansprüche 1 oder 2, bei dem ein U-Boden (26) der U-förmigen Fläche (7) mit einer Dicke (b) deutlich dicker ausgebildet ist als die mittlere Wandstärke (d) von U-Schenkeln (8', 8") der U-förmigen Fläche (7) und
bei dem der U-Boden (26) durch kurze, nur im Bereich des U-Bodens (26) verlaufende Schweißspuren (19, 19') flächig aufgefüllt wird.

4. Verfahren nach einem oder mehreren der Ansprüche 1, 2 oder 3,
bei dem für eine nachfolgende Schweißlage die zumindest eine Schweißspur (22', 22'') der nachfolgenden Schweißlage mittig zwischen den zugrundeliegenden, direkt benachbarten Schweißspuren (16', 16'', ...) gelegt wird.

5. Verfahren nach einem oder mehreren der Ansprüche 1, 2, 3 oder 4,
bei dem die innen liegenden Schweißspuren (16', 16'', ...) keine geschlossen verlaufende Linien darstellen.

6. Verfahren nach einem oder mehreren der Ansprüche 1, 2, 3, 4 oder 5,
bei dem die Schweißkontur (4) nahe oder auf dem Rand (29, 32) unter einem deutlich von 90° verschiedenen Winkel eines Schweißstrahls zur Fläche (7) gelegt wird,
insbesondere unter einem Winkel von 10° bis 15° zur Senkrechten der Fläche (7).
